# FASCICULE DE BREVET EUROPEEN

(11) **EP 4 276 668 B1**
(45) Date de publication et mention de la délivrance du brevet: **15.04.2026**
(21) Numéro de dépôt: 23171635.8
(22) Date de dépôt: 04.05.2023
(51) Int. Cl.: G06F 21/60, G06F 21/44, G06F 21/74, G06F 21/85, H04L 9/40, H04W 12/06, G06F 21/31, G06F 21/53

(54) **ROUTEUR**
ROUTER
ROUTER

(30) Priorité: 13.05.2022 FR 2204563
(43) Date de publication de la demande: 15.11.2023
(73) Titulaire: STMicroelectronics S.r.l., 20864 Agrate Brianza (MB) (IT); STMicroelectronics Belgium, 1831 Diegem (BE)
(72) Inventeur: VAN NIEUWENHUYZE, Olivier, 1970 WEZEMBEEK-OPPEM (BE); VENEROSO, Amedeo, 81100 CASERTA (IT)
(74) Mandataire: Cabinet Beaumont

(56) Documents cités:
- US-A1- 2019 073 491
- US-A1- 2020 099 658
- US-A1- 2020 356 699

## Description

### Domaine technique

La présente description concerne de façon générale les systèmes et dispositifs électroniques, et plus particulièrement, la protection des données d'un utilisateur utilisant un tel système ou dispositif électronique.

### Technique antérieure

Les dispositifs électroniques complexes, tels que les téléphones portables, les tablettes électroniques, les ordinateurs, etc, intègrent, au fil du temps, de plus en plus de fonctionnalités et permettent la mise en place de services numériques et/ou digitaux afin de s'intégrer au mieux à la vie quotidienne. Pour mettre en oeuvre ces fonctionnalités, ces appareils peuvent intégrer des composants électroniques spécifiques à ces fonctionnalités et adaptés à échanger des données les uns avec les autres. Ces données peuvent comprendre des informations privées, ou sensibles.

Intégrer de nouveaux composants électroniques, par exemple pour améliorer la sécurité ou pour rajouter des nouvelles fonctionnalités, impliquent d'augmenter la puissance et la surface occupée par des puces utilisées dans ces dispositifs électroniques.

Il serait souhaitable de pouvoir améliorer, au moins en partie, certains aspects, de l'accès et/ou de la protection de données échangées au sein d'un même système ou dispositif électronique, et de minimiser les dimensions des dispositifs électroniques.

### Résumé de l'invention

Il existe un besoin pour des systèmes ou dispositifs électroniques dans lequel l'échange interne de données est mieux protéger, et répond à certains standards.

Il existe un besoin pour des systèmes ou dispositifs électroniques dans lequel les fonctionnalités de certains de leurs composants électroniques sont intégrées à leur puce principale afin de minimiser la surface occupée par les composants électroniques utilisés dans ces systèmes et dispositifs électroniques.

Il existe un besoin pour établir des communications sécurisées entre différentes parties d'une même puce liées à différentes fonctionnalités, par exemple pour des besoins de dépannage.

Il existe un besoin pour des systèmes ou dispositifs électroniques comprenant un routeur dans lequel l'échange interne de données est mieux protégé.

Il existe un besoin pour des systèmes ou dispositifs électroniques comprenant, en outre, un élément sécurisé dans lequel l'échange interne de données est mieux protégé.

Un mode de réalisation pallie tout ou partie des inconvénients des systèmes ou dispositifs électroniques connus.

Un mode de réalisation prévoit un procédé de communication, à un module tiers d'un premier dispositif électronique, de premières données échangées entre un premier module du premier dispositif électronique et un deuxième module, le module tiers étant différent du premier module et du deuxième module, le premier dispositif comprenant au moins un élément sécurisé et un routeur transmettant les premières données du premier module au deuxième module, le routeur étant adapté à être mis dans un mode sécurisé dans lequel, lorsque le module tiers demande accès aux premières données, un procédé d'authentification est mis en oeuvre pour vérifier si le module tiers est autorisé ou non à avoir accès aux premières données.

Un autre mode de réalisation prévoit un dispositif électronique comprenant au moins :
- un premier module électronique ;
- un élément sécurisé ;
- un routeur échangeant des premières données entre le premier module et un deuxième module ; et
- un module tiers différent du premier module et du deuxième module,
le routeur étant adapté à être mis dans un mode sécurisé dans lequel, lorsque le module tiers demande accès aux premières données, un procédé d'authentification est mis en oeuvre pour vérifier si le module tiers est autorisé ou non à avoir accès aux premières données.

Selon un mode de réalisation, pendant la mise en oeuvre du procédé d'authentification les premières données sont stockées dans l'élément sécurisé ou dans le routeur.

Selon un mode de réalisation, pendant leur stockage, les premières données sont au moins partiellement visibles par le module tiers.

Selon un mode de réalisation, le procédé d'authentification est mis en oeuvre par le routeur.

Selon un mode de réalisation, dans lequel le procédé d'authentification est mis en oeuvre par l'élément sécurisé.

Selon un mode de réalisation, le procédé d'authentification permet d'authentifier, en plus du module tiers, le premier module, le deuxième module, ou l'utilisateur du premier dispositif.

Selon un mode de réalisation, le procédé d'authentification est mis en oeuvre par l'intermédiaire d'un serveur externe.

Selon un mode de réalisation, le procédé d'authentification comprend la mise en oeuvre de plusieurs règles secondaires.

Selon un mode de réalisation, le routeur est adapté à demander l'autorisation pour être dans le mode sécurisé.

Selon un mode de réalisation, le routeur est adapté à sortir du mode sécurisé à réception d'une instruction particulière.

Selon un mode de réalisation, la commande particulière provient de l'élément sécurisé.

Selon un mode de réalisation, le routeur comprend une série de règles concernant la politique de sécurité des communications du premier dispositif.

Selon un mode de réalisation, l'élément sécurisé transmet ladite série de règles audit routeur.

Selon un mode de réalisation, le deuxième module fait partie du premier dispositif électronique.

Selon un mode de réalisation, le deuxième module fait partie d'un deuxième dispositif électronique, différent du premier dispositif électronique.

Selon un mode de réalisation, le routeur est intégré à une puce mettant en oeuvre le premier module et/ou le module tiers.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un exemple d'un dispositif électronique pouvant mettre en oeuvre les modes de réalisation des figures 5 à 8 ;
la figure 2 représente, très schématiquement et sous forme de blocs, un exemple plus détaillé d'un dispositif de la figure 1 ;
la figure 3 représente, très schématiquement et sous forme de blocs, un autre exemple plus détaillé d'un dispositif de la figure 1 ;
la figure 4 représente, très schématiquement et sous forme de blocs, un autre exemple plus détaillé d'un dispositif de la figure 1 ;
la figure 5 représente un schéma-bloc illustrant un mode de mise en oeuvre d'un procédé de communication interne au dispositif de la figure 1 ;
la figure 6 représente un schéma-bloc illustrant un mode de mise en oeuvre d'un procédé de communication interne au dispositif de la figure 1 ;
la figure 7 représente un schéma-bloc illustrant un autre mode de mise en oeuvre d'un procédé de communication interne au dispositif de la figure 1 ; et
la figure 8 représente un schéma-bloc illustrant un autre mode de mise en oeuvre d'un procédé de communication interne au dispositif de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différents protocoles de communication internes utilisés par les différents modules d'un dispositif électronique ne sont pas détaillés ici, les modes de réalisation décrits étant adaptés à être mis en oeuvre avec les protocoles de communication usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

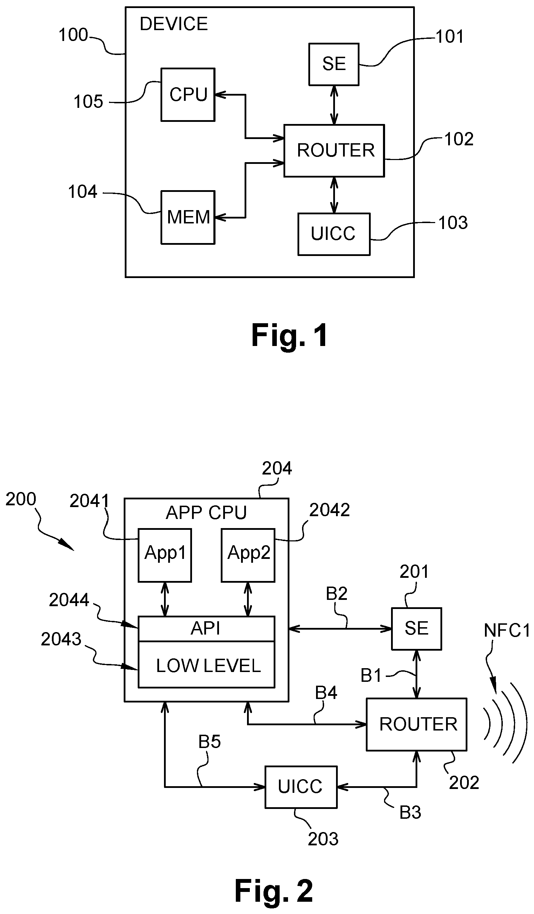

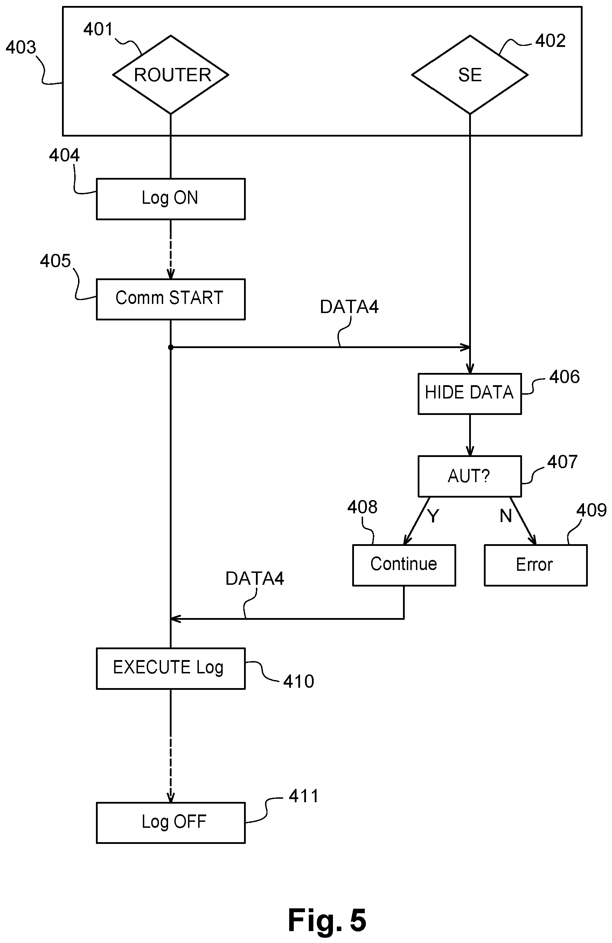

La figure 1 représente, très schématiquement et sous forme de blocs, un mode de réalisation d'un dispositif électronique 100 (DEVICE) auquel peut s'appliquer les procédés de communication décrits en relation avec les figures 5 à 8.

Le dispositif 100 comprend, au moins :
- un élément sécurisé 101 (SE) ;
- un routeur 102 (ROUTER) ; et
- au moins deux autres modules électroniques.

L'élément sécurisé 101 est un dispositif électronique adapté à traiter des données sensibles et/ou secrètes, et qui est considéré comme fiable. L'élément sécurisé 101 comprend, lui-même, par exemple, un processeur, une ou plusieurs mémoires, des modules de traitement de données chiffrées, comme, par exemple, un module de chiffrement de données et/ou un module de déchiffrement de données. L'élément sécurisé 101 est adapté à communiquer avec les autres modules électroniques du dispositif 100 par l'intermédiaire du routeur 102. Selon une variante de réalisation, l'élément sécurisé 101 peut avoir une ligne de communication directe avec un ou plusieurs autres composants/modules du dispositif 100. Selon un exemple, cette ligne de communication directe peut être mise en oeuvre par des commandes liées (Binding Command), par un bus de communication et/ou par une mémoire partagée.

Le routeur 102 est un dispositif électronique adapté à gérer tout ou partie des communications internes du dispositif 100, de préférence toutes les communications internes, mais qui peut, de plus, gérer au moins une partie des communications externes du dispositif 100. On appelle ici, les communications internes du dispositif 100 les communications, c'est-à-dire les échanges de données et d'instructions, entre des modules électroniques qui sont internes au dispositif 100. Les communications externes du dispositif 100 sont, dans ce cas, les communications, c'est-à-dire les échanges de données et ou d'instructions, réalisées avec un ou plusieurs composants du dispositif 100 et un ou plusieurs dispositifs externes au dispositif 100. Le routeur 102 peut, en outre, être adapté à gérer des communications internes au dispositif 100 dont les données peuvent être destinées à des communications externes. Selon un exemple, le routeur 102 peut être adapté à effectuer des conversions de type de données, comme par exemple des adaptations de données adaptées à un premier protocole en des données adaptées à un deuxième protocole différent du premier protocole.

Lors d'une communication interne, le routeur 102 a pour rôle de réceptionner toutes les données et/ou instructions émises par un premier module électronique du dispositif électronique 100, puis de les transmettre à un deuxième module électronique du dispositif électronique 100. Pour cela, le routeur 102 se base, par exemple :
- sur des informations contenues dans les données et/ou instructions à transmettre ;
- sur des données relatives à l'émission et/ou des données relatives à la réception fournies par le premier module, et, le cas échéant, le deuxième module ; et/ou
- sur des données contenues dans une table de correspondance interne.

Lors d'une communication externe, le routeur 102 a pour rôle de réceptionner toutes les données et/ou instructions émises par un dispositif externe, et de les adresser à un ou plusieurs modules internes du dispositif 100, ou, inversement, de réceptionner toutes les données et/ou instructions émises par un dispositif interne du dispositif 100, et de les adresser à un dispositif externe au dispositif 100. Pour cela, le routeur 102 se base, par exemple, sur des informations contenues dans les données et/ou instructions à transmettre, ou, par exemple, sur des données fournies par le dispositif électronique externe.

De plus, et selon un mode de réalisation, le routeur 102 est adapté à permettre à certains modules internes au dispositif 100 d'avoir accès à tout ou partie des données échangées dans une communication interne ou externe dont il ne fait pas partie. Autrement dit, le routeur 102 peut permettre, à un module interne du dispositif 100, de prendre connaissance de données dont il n'est pas le destinataire premier. Dans ce cas, on dit que le module s'enregistre, se "log" (communication log). Dans la suite de la description, on appelle module tiers, le module interne du dispositif 100 voulant avoir accès à tout ou partie de données d'une communication dont il ne fait pas partie en premier lieu. Dit autrement, un module tiers à une communication est un module différent du module initiant la communication et du module recevant la communication.

Selon un mode de réalisation, lorsqu'un module tiers cherche à avoir accès à des données d'une communication, le routeur 102, lorsqu'il est dans un mode sécurisé, peut appliquer un traitement spécifique à certaines communications. Plus particulièrement, le routeur 102 peut stocker, ou faire stocker par un autre composant/module, tout ou partie des données, et demander au module tiers de s'authentifier avant de lui laisser, ou non, l'accès à tout ou partie de ces données. La communication peuvent être, indifféremment, une communication interne ou une communication externe. L'authentification du module tiers peut être mise en oeuvre par le routeur 102 lui-même, ou selon une variante de réalisation, par l'élément sécurisé 101. De même, les données de la communication peut être stockées par le routeur 102 ou par l'élément sécurisé 101 avant que l'authentification du module tiers ne soit effectuée. Selon un mode de réalisation, ce mode sécurisé peut être activé par un procédé d'authentification. Ce mode sécurisé est décrit plus en détails en relation avec les figures 5 à 8.

On appelle dans cette description, un module un ensemble de circuits et/ou de composants liés à une ou plusieurs fonctionnalités du dispositif électronique. Lesdits un ou plusieurs autres modules électroniques du dispositif sont, à titre d'exemple, une carte de circuit intégré universelle (Universal Integrated Circuit Card, UICC) 103 (UICC), une ou plusieurs mémoires 104 (MEM), et un processeur ou microprocesseur 105 (CPU). Ces modules sont des modules électroniques classiques d'un dispositif électronique et lui permettent de mettre en oeuvre un ou plusieurs fonctionnalités. Le dispositif 100 est, par exemple, un téléphone sans fil, un téléphone intelligent ("smartphone"), un objet connecté, une tablette, etc. Selon une variante, on peut désigner par l'expression "module" une entité logicielle mise en oeuvre par le dispositif électronique.

Selon un mode de réalisation, le routeur 102 est un module indépendant des autres modules du dispositif électroniques 100, c'est-à-dire que le routeur 102 n'est groupé avec aucun autre module du dispositif 100. Autrement dit, le routeur 102 peut être isolé physiquement des autres modules, par exemple en étant mis en oeuvre par une unique puce, et/ou isolé de manière logicielle, par exemple en étant protégé des autres logiciels mis en oeuvre par le dispositif 100.

Selon un autre mode de réalisation, le routeur 102 peut être groupé à un ou plusieurs modules du dispositif 100. En d'autres termes, le routeur 102 peut être mis en oeuvre physiquement et/ou mise en oeuvre de manière logicielle de façon groupée avec d'autres modules. Selon un premier exemple, le routeur 102 peut être mis en oeuvre par une même puce qu'un ou plusieurs autres modules du dispositif électronique 100 ou peut être intégré ou embarqué à une puce mettant en oeuvre un ou plusieurs autres modules du dispositif électronique 100. Selon un deuxième exemple, le routeur 102 peut être mis en oeuvre par le même système d'exploitation qu'un ou plusieurs autres modules du dispositif 100.

Les figures 2, 3, et 4 illustrent des exemples plus détaillés de dispositifs électroniques du type du dispositif 100. Les figures 5 à 8 illustrent des modes de mise en oeuvre de procédés de communication sécurisée pouvant être mis en oeuvre par le dispositif 100 ou l'un des dispositifs décrits en relation avec les figures 2, 3, ou 4.

La figure 2 représente, très schématiquement et sous forme de blocs, un exemple de réalisation d'un dispositif électronique 200 du type du dispositif électronique 100 décrit en relation avec la figure 1.

Le dispositif 200 comprend :
- un élément sécurisé 201 (SE) ;
- un routeur 202 (ROUTEUR) ; et
- au moins deux modules électroniques parmi lesquels une carte de circuit intégré universelle 203 (UICC), et un processeur 204 (APP CPU).

L'élément sécurisé 201 est du même type que l'élément sécurisé 101 décrit en relation avec la figure 1. Selon un exemple, l'élément sécurisé 201 est adapté à communiquer avec le routeur 202 par l'intermédiaire d'un bus de données B1 adapté aux communications de type SWP (Single Wire Protocol) ou par l'intermédiaire d'une mémoire adaptée aux communications de type IPC (Inter-Process Call). Selon un exemple, l'élément sécurisé 201 est adapté à communiquer directement avec le processeur 204 par l'intermédiaire d'un bus de données B2 adapté aux communications de type I2C (Inter-Integrated Circuit) ou de type SPI (Serial Peripheral Interface).

Le routeur 202 est du même type que le routeur 102 décrit en relation avec la figure 1. Le routeur 202 est tout particulièrement adapté à gérer une partie des communications internes au dispositif 200 et à gérer les communications en champ proche (Near Field Communication, NFC) NFC1 du dispositif 300. Pour cela, le routeur 202 est adapté à communiquer avec l'élément sécurisé 201 par l'intermédiaire du bus de données B1, avec la carte de circuit intégré universelle 203 par l'intermédiaire d'un bus de données B3, et avec le processeur 204 par l'intermédiaire d'un bus de données B4. Le bus de données B3 est adapté aux communications de type SWP. Le bus de données B4 peut être du même type que le bus B2.

La carte de circuit intégré universelle 203 est, par exemple, une carte SIM (subscriber identity/identification module) qui peut être assimilée à un élément sécurisé. Selon un exemple, la carte 203 est adaptée à communiquer directement avec le processeur 204 par l'intermédiaire d'un bus de données B5 adapté aux communications de type ISO7816. La carte de circuit intégré universelle 203 peut être une carte physique retirable ou une carte intégrée (eUICC).

Le processeur 204 est un processeur adapté à mettre en oeuvre une ou plusieurs applications, par exemple deux applications 2041 (App1) et 2042 (App2) dans l'exemple illustré en figure 2. Pour cela, le processeur 204 est adapté à mettre en oeuvre plusieurs logiciels servant d'interface entre les applications 2041 et 2042 et les autres modules du dispositif 300. Ces logiciels d'interface comprennent, par exemple, des logiciels de bas niveau 2043 (LOW LEVEL) et des logiciels de conversion 2044 (API). Les logiciels d'interface sont adaptés à traduire les commandes envoyées par les applications en commandes compréhensibles par les autres modules du dispositif 300. Selon un exemple, les logiciels de conversion 2044 sont des logiciels permettant de traduire une commande provenant d'une application en plusieurs commandes destinées chacune à un module du dispositif 300. Selon un exemple, les logiciels de bas niveau 2043 sont des logiciels adaptés à convertir des commandes destinés à un module du dispositif 300 en une commande compréhensible par ledit module. D'autres architectures sont possibles ici, et l'exemple décrit ici n'est pas limitatif. Les bus de données B2, B4 et B5 sont adaptés à communiquer avec les logiciels d'interface, par exemple les logiciels de bas niveau 2043, du processeur 204.

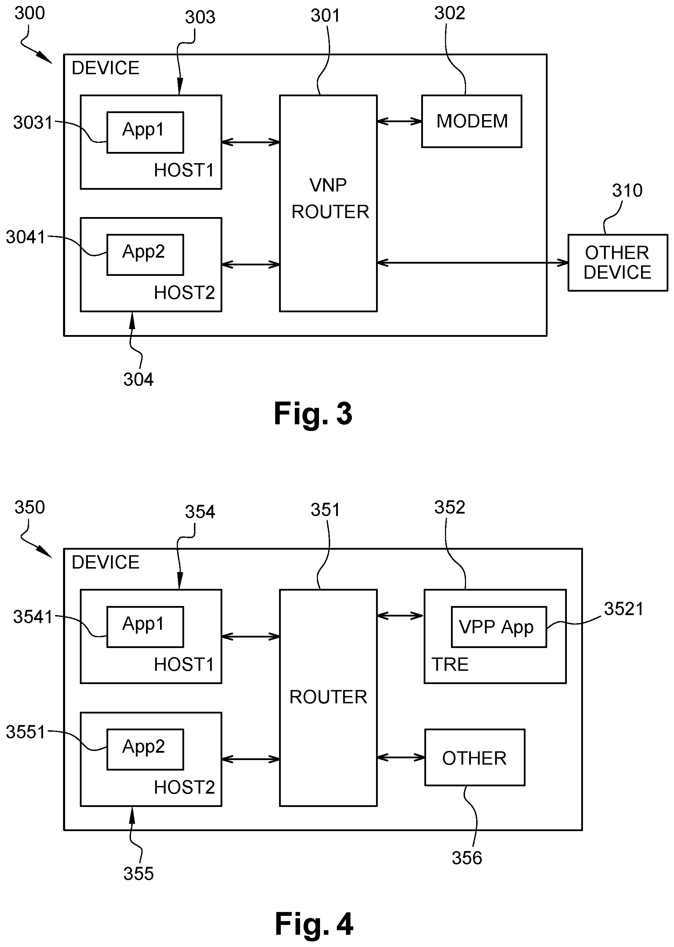

La figure 3 représente, très schématiquement et sous forme de blocs, un mode de réalisation d'un dispositif électronique 300 (DEVICE) du type du dispositif électronique 100 décrit en relation avec la figure 1.

Le dispositif 300 comprend :
- un routeur 301 (VNP ROUTER) ;
- un modem 302 (MODEM) ;
- un premier logiciel hôte 303 (HOST 1) mettant en oeuvre au moins une application 3031 (App1) ; et
- un deuxième logiciel hôte 304 (HOST 2) mettant en oeuvre au moins une application 3032 (App2).

Le routeur 301 est un routeur qui gère toutes les communications internes du dispositif 300, et aussi au moins une partie des communications externes du dispositif 300. Selon un exemple, le routeur 301 permet une communication, filaire ou sans fil, avec un dispositif externe 310 (OTHER DEVICE).

Le modem 302 est, par exemple, un module permettant la connexion du dispositif 300 à un réseau de communication, par exemple le réseau téléphonique ou le réseau internet. Le modem 302 comprend un élément sécurisé, par exemple une carte de circuit intégré universelle, lui permettant d'obtenir des autorisations de connexion audit réseau de communication.

Les premier et deuxième logiciels hôte 303 et 304 sont, par exemple, des processeurs ou des parties de processeurs dédiés à une application ou un ou plusieurs groupes d'application. En figure 3, chaque logiciel hôte 303, 304 est dédié à une application.

La figure 4 représente, très schématiquement et sous forme de blocs, un mode de réalisation d'un dispositif électronique 350 (DEVICE) du type du dispositif électronique 100 décrit en relation avec la figure 1.

Le dispositif 350 comprend :
- un routeur 351 (ROUTER) ;
- un élément résistant 352 (TRE) (Tamper Resistant Element) mettant en oeuvre au moins une application 3521 (VPP App) ;
- un premier logiciel hôte 353 (HOST 1) mettant en oeuvre au moins une application 3531 (App1) ;
- un deuxième logiciel hôte 354 (HOST 2) mettant en oeuvre au moins une application 3532 (App2) ;
- un ou plusieurs autres composants électroniques 356 (OTHER).

Le routeur 351 est un routeur qui gère toutes les communications internes du dispositif 350 à destination ou en provenance de l'élément résistant 352. Le routeur 351 peut, en outre, gérer les communications à destination ou en provenance des autres composants électroniques 356.

L'élément résistant 352 est un élément sécurisé adapté à mettre en oeuvre des applications, comme l'application 3521. L'élément résistant 352 peut être formé sur une puce distincte de celle du routeur ou bien être directement intégré avec le routeur 351. Dans le cas où l'élément résistant 352 est intégré au routeur 351, les communications entre ces deux éléments peuvent être mises en oeuvre par un ou plusieurs bus et/ou une ou plusieurs mémoires internes au routeur 351. Selon un exemple, l'élément résistant 352 peut être intégré à un autre composant du dispositif 350, comme un processeur par exemple, dans ce cas, toutes les communications à destination ou en provenance de l'élément résistant 352 utiliseront le routeur 351 pour être mises en oeuvre.

L'élément résistant 352 comprend par exemple ses propres mémoires (une ou plusieurs), et l'application 3521 peut être stockée dans l'une de ses mémoires. L'élément résistant 352 est également apte à mettre en oeuvre plusieurs applications du type de l'application 3521 (VPP App). Plusieurs mises en oeuvre sont possibles, l'une d'entre elles peut être basée sur le stockage des données des applications en mémoire interne ou dans des mémoires externes à l'élément résistant 352. Dans le cas d'un stockage externe, les données stockées dans une ou plusieurs mémoires externes peuvent être protégées par l'élément résistant, par exemple à l'aide d'un algorithme de chiffrement. Une autre mise en oeuvre peut comprendre d'utiliser d'un stockage en mémoire interne et un stockage en mémoire externe.

Les premier et deuxième logiciels hôte 354 et 355, et les applications 3541 et 3551 sont du type des logiciels hôte et des applications décrites en relation avec la figure 3.

La figure 5 est un schéma-bloc illustrant un mode de mise en oeuvre d'un procédé de communication sécurisé, pendant lequel un module tiers cherche à avoir accès à des données d'une communication. Le procédé de communication met en oeuvre un routeur 401 (ROUTER) et un élément sécurisé 402 (SE) d'un même dispositif électronique 403. Le dispositif 403 est du type du dispositif 100 décrit en relation avec la figure 1, et ainsi le routeur 401 et l'élément sécurisé 402 sont du type du routeur 102 et de l'élément sécurisé 101.

A une étape 404 (bloc "Log ON"), le routeur 401 enclenche le mode sécurisé dans lequel une authentification est demandée à un module tiers voulant avoir accès aux données d'une communication. Selon un exemple, le mode sécurisé est enclenché suite à la réception d'une commande provenant de l'élément sécurisé ou suite à un évènement particulier, par exemple le passage du dispositif complet à un mode de fonctionnement particulier, par exemple, un mode de test.

Selon une variante de réalisation, le routeur 401 peut demander une autorisation pour être dans le mode sécurisé. Cette autorisation peut provenir de l'élément sécurisé 401, de l'utilisateur du dispositif 403, ou de la part d'un serveur externe. Selon un autre exemple, l'autorisation peut provenir d'un procédé d'authentification permettant la reconnaissance de l'utilisateur du dispositif électronique 403, ce procédé d'authentification pouvant par exemple demander un mot de passe ou une reconnaissance biométrique. L'autorisation obtenue par le routeur 401 peut, selon un exemple, être vérifiée par le routeur 401 ou par l'élément sécurisé 402.

A une étape 405 (bloc "Comm START'), successive à l'étape 404, une communication commence. La communication peut être une communication interne au dispositif 403 ou une communication externe entre le dispositif 403 et un autre dispositif électronique. En pratique, le routeur 401 commence à recevoir des données DATA4 d'une communication entre un premier module et un deuxième module. Le premier module fait partie du dispositif électronique 403, et le deuxième module peut être interne au dispositif électronique 403 ou être un dispositif électronique externe au dispositif 403. Selon un exemple, la communication peut être une communication entre deux modules du dispositif 403, une communication entre un module du dispositif 403 et un dispositif externe au dispositif 403, ou même une communication entre l'élément sécurisé 402 et un autre module du dispositif 403 ou un dispositif externe.

De plus, à l'étape 405, un module tiers, c'est-à-dire un module différent du premier et du deuxième module, demande à avoir accès à tout ou partie des données DATA4 de la communication.

Le routeur 401 joue son rôle et transfère les données DATA4 du premier module au deuxième module. Mais de plus, comme le routeur 401 est dans un mode sécurisé et qu'un module tiers demande l'accès aux données DATA4, les données DATA4 sont, en outre, copiées et transférées à l'élément sécurisé 402.

A une étape 406 (bloc "HIDE DATA"), l'élément sécurisé 402 reçoit les données DATA4 et les stocke de façon sécurisé. Les données DATA4 ne sont donc pas rendues accessibles au module tiers par le routeur 401. Selon une variante de réalisation, les données DATA4 sont stockées de manière sécurisée par le routeur 401 lui-même. Selon un exemple, si la capacité de stockage de l'élément sécurisé 402, ou du routeur 401 le cas échéant, est saturée, le routeur 401 peut être adaptée à le détecter et à émettre un signal d'erreur.

A une étape 407 (bloc "AUT ?"), l'élément sécurisé démarre un procédé d'authentification du module tiers pour vérifier si les données DATA4 peuvent lui être transmises par l'élément le stockant, c'est-à-dire le routeur 401 ou l'élément sécurisé 402.

Selon un premier exemple, le procédé d'authentification est destiné à authentifier directement le module tiers, mais aussi le premier module et/ou le deuxième module.

Selon un deuxième exemple, le procédé d'authentification est destiné à authentifier le module tiers en authentifiant l'utilisateur du dispositif 403, par exemple en demandant un code PIN.

Selon un troisième exemple, le procédé d'authentification est réalisé par l'intermédiaire d'un service utilisant un serveur externe qui pourrait vouloir avoir accès aux données DATA4.

Selon un quatrième exemple, le procédé d'authentification comprend la mise en oeuvre de plusieurs règles secondaires. Une règle secondaire peut être la mise en oeuvre d'un procédé d'authentification demandé par un module du dispositif 403 ou par un logiciel ou une application mise en oeuvre par le dispositif 403.

De plus, et selon une variante, les données DATA4 peuvent être visibles ou partiellement visibles par le module tiers lors de la mise en oeuvre du procédé d'authentification. Selon un premier exemple, les données DATA4 sont totalement visibles par le module tiers en cours d'authentification. Selon un deuxième exemple, seule une partie des données DATA4 sont visibles par le module tiers, par exemple les en-têtes des données DATA4. Selon un troisième exemple, seule la forme, ou la configuration, des données DATA4 sont visibles par le module tiers, de façon, par exemple, à reconnaître si les données DATA4 sont des données concernant une communication sensible, c'est-à-dire une communication dont les données sont sensibles et se doivent d'être protégées, comme une transaction bancaire ou l'identification d'un utilisateur pour l'utilisation d'une carte de SIM (subscriber identity/identification module). Selon un exemple, si un utilisateur soumet son code PIN pour démarrer l'utilisation d'une carte SIM, les informations relatives à ce code PIN sont anonymisées.

Si le résultat de l'authentification est correcte (sortie Y du bloc "AUT ?"), l'étape suivante est une étape 408 (bloc "Continue"), sinon (sortie N du bloc "AUT ?"), l'étape suivante est une étape 409 (bloc "Error").

A l'étape 408, le module tiers est autorisé à avoir accès à tout ou partie des données DATA4. Pour cela, les données DATA4 sont renvoyées au routeur. Selon une variante, si les données DATA4 sont stockées par le routeur 401 alors, à cette étape, les données DATA4 sont rendues accessibles au module tiers.

A l'étape 409, la communication n'est pas autorisée par l'élément sécurisé 402. Dans ce cas, les données DATA4 peuvent être effacées pour que le module tiers n'y ai jamais accès. Selon une variante de réalisation, un compteur d'erreur peut être mis en place pour laisser plusieurs chances au module tiers, ou à l'utilisateur, devant s'authentifier. Selon un exemple, le compteur peut permettre de compter les essais, et si ce nombre d'essais dépasse une valeur limite alors la possibilité de s'authentifier se désactive pour une durée prédéterminée. Selon un autre exemple, si la valeur du compteur atteint un nombre limite alors les données DATA4 sont effacées, mais tant que la valeur du compteur est inférieure à la valeur limite alors les données DATA4 sont conservées.

A une étape 410 (bloc "EXECUTE Log"), successive à l'étape 408, le routeur 401 transmet les données DATA4 au module tiers. Selon un exemple, l'authentification réalisée par l'élément sécurisée 402 donne l'autorisation de rendre accessible tout ou partie des données DATA4. Selon un autre exemple, le routeur 401 peut demander périodiquement, pendant la mise en oeuvre de la communication, la réalisation d'une authentification.

A une étape 411 (bloc "Log OFF"), successive à l'étape 410, le routeur 401 sort de son mode sécurisé. Selon un exemple, le routeur 401 peut sortir de ce mode suite à la réception d'une commande provenant de l'élément sécurisé ou suite à un évènement particulier, par exemple le passage du dispositif 403 à un autre mode de fonctionnement particulier.

Un avantage de ce mode de réalisation, est qu'il permet d'ajouter un niveau de protection supplémentaire aux communications interne et externe d'un dispositif électronique.

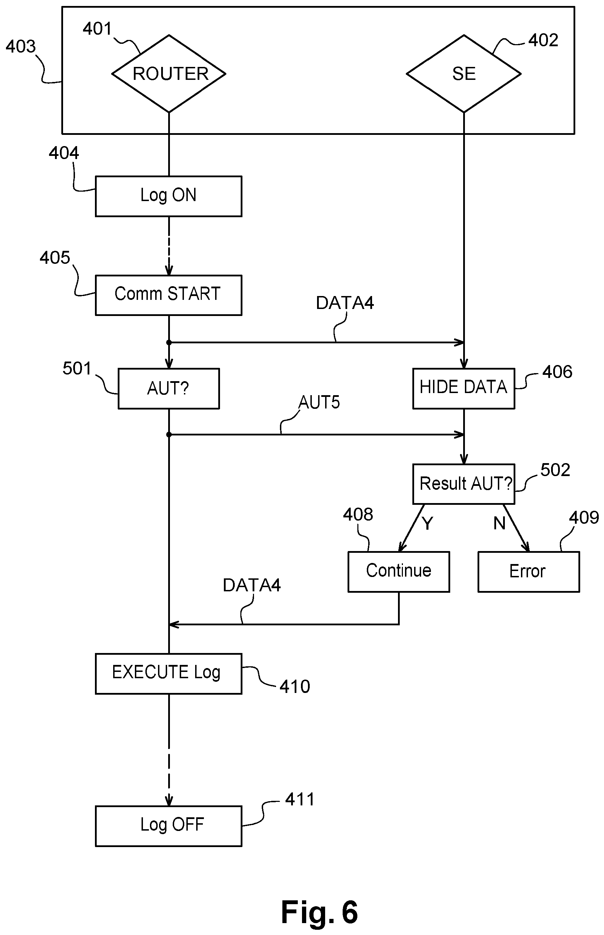

La figure 6 est un schéma-bloc illustrant un autre mode de mise en oeuvre d'un procédé de communication sécurisé mettant en oeuvre un routeur 401 (ROUTER) et un élément sécurisé 402 (SE) d'un même dispositif électronique 403 de la figure 5.

Le mode de mise en oeuvre du procédé de communication sécurisé décrit en relation avec la figure 5 présentent des éléments communs avec le procédé de communication sécurisé décrit en relation avec la figure 5. En particulier, dans le procédé de la figure 6, l'authentification du module tiers est mise en oeuvre par le routeur 401, et non par l'élément sécurisé 402.

Ainsi, le procédé de la figure 6 comprend des étapes communes avec le procédé de la figure 5, ces étapes communes ne sont pas décrites de nouveau ici. Ces étapes communes sont :
- l'étape 404 (bloc "Log ON") ;
- l'étape 405 (bloc "Comm Start") ;
- l'étape 406 (bloc "HIDE DATA") ;
- l'étape 408 (bloc "Continue") ;
- l'étape 409 (bloc "Error") ;
- l'étape 410 (bloc "EXECUTE Log") ; et
- l'étape 411 (bloc "Log Off").

Comme en figure 5, le procédé commence par l'étape 404, qui est suivie par l'étape 405.

L'étape 405 est, quant à elle, suivie d'une étape 501 (bloc "Aut ?") pendant laquelle le routeur 401 démarre un procédé d'authentification pour authentifier le module tiers. Selon un premier exemple, le procédé d'authentification est destiné à authentifier directement le module tiers, mais aussi le premier module et/ou le deuxième module. Selon un deuxième exemple, le procédé d'authentification est destiné à authentifier directement l'utilisateur du dispositif 403, par exemple en demandant un code PIN. Selon un troisième exemple, le procédé d'authentification est destiné à authentifier le module tiers par l'intermédiaire d'un service utilisant un serveur externe.

L'information AUT5 concernant la réussite, ou non, du procédé d'authentification est envoyée à l'élément sécurisé 402, si c'est bien lui qui stocke les données DATA4.

A une étape 502 (bloc "Result Aut ?"), l'élément sécurisé 402 reçoit l'information AUT5 et en déduit si l'authentification a réussie ou non. Si l'information AUT5 indique que l'authentification est correcte (sortie Y du bloc "Result Aut ?"), l'étape suivante est l'étape 408, sinon (sortie N du bloc "Result Aut ?"), l'étape suivante est l'étape 409 (bloc "Error").

L'étape 408 est ensuite suivie de l'étape 410, puis de l'étape 411.

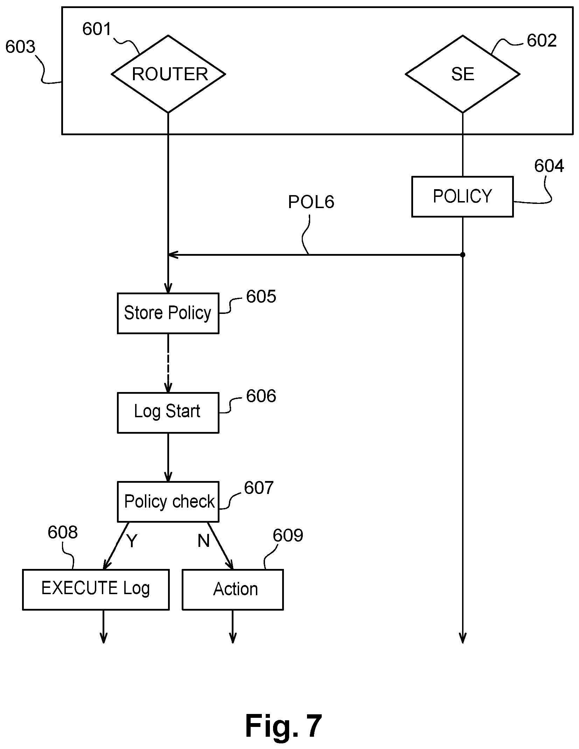

La figure 7 est un schéma-bloc illustrant un autre mode de mise en oeuvre d'un procédé de communication sécurisé, pendant lequel un module tiers cherche à avoir accès à des données d'une communication. Le procédé de communication met en oeuvre un routeur 601 (ROUTER) et un élément sécurisé 602 (SE) d'un même dispositif électronique 603 de la figure 7. Le dispositif 603 est du type du dispositif 100 décrit en relation avec la figure 1, et ainsi le routeur 601 et l'élément sécurisé 602 sont, respectivement, du type du routeur 102 et de l'élément sécurisé 101.

A une étape 604 (bloc "POLICY"), l'élément sécurisé 602 a à sa disposition une série de règles POL6 concernant une politique de protection des communications internes, et de façon optionnelle des communications externes, du dispositif 101. Cette série de règles POL6 est destinée à être mise en oeuvre par le routeur 601 lorsqu'un module tiers demande à avoir accès à des données d'une communication.

On appelle ici règle, une instruction que le routeur doit mettre en oeuvre dans une situation précise.

La série de règles POL6 peut comprendre différents types de règles. Selon un premier exemple, une règle de la série de règles POL6 peut interdire à un module tiers particulier, ou à tout module tiers, l'accès aux données d'une communication spécifique, par exemple une communication d'un certain type. Selon un deuxième exemple, une autre règle de la série de règles POL6 peut n'autoriser que la transmission de tout ou d'une partie des données d'une communication spécifique à un module tiers. Selon un troisième exemple, une autre règle de la série de règles POL6 peut obliger le module tiers à s'authentifier de différentes manières pour avoir accès à tout ou partie des données d'une communication. D'autres règles sont décrites ci-après, et encore d'autres règles peuvent être imaginées par la personne du métier sans faire preuve d'activité inventive.

L'élément sécurisé 601 peut obtenir la série de règles POL6 de plusieurs manières. Selon un premier exemple, l'élément sécurisé 601 peut créer la série de règles POL6 à partir d'instructions fournies par le constructeur du dispositif 603, par l'utilisateur du dispositif 603, par l'intermédiaire d'un serveur externe (qui pourrait autoriser directement ou par un autre système d'authentification la communication), et/ou par les logiciels et applications mises en oeuvre par le dispositif 603. Dans ce cas, l'élément sécurisé 602 peut mettre à jour la série de règles à chaque nouvelle instruction reçue. Selon un deuxième exemple, la série de règles POL6 est stockée dans l'élément sécurisé 601 sans que celui-ci ne puisse la modifier.

Selon un mode de réalisation, lorsque des applications mises en oeuvre par le dispositif 603 sont à l'origine de règles de la série de règles, des règles différentes peuvent être appliquées en fonction de quelle application est démarrée ou en cours d'exécution. Ces règles peuvent être complétées par des règles fournies par le système d'exploitation du dispositif 603 et/ou par des règles fournies par un logiciel de protection ou de sécurité du dispositif 603. Un logiciel de protection ou de sécurité peut, par exemple, fournir des règles empêchant la mise en oeuvre de règles d'une application spécifique qu'il juge non fiable, ou forçant la dissimulation de certains données sensibles.

Selon un autre mode de réalisation, les règles POL6 peuvent être elles-mêmes protégées par l'élément sécurisé 602 pour en garantir leur intégrité. Pour cela, l'élément sécurisé 602 peut appliquer un procédé de signature aux règles POL6.

A une étape 605 (bloc "Store Policy"), successive à l'étape 604, le routeur 601 reçoit la série de règles POL6 de la part de l'élément sécurisé 602 et la stocke. Le routeur 601 ayant cette série de règles en mémoire, il peut la mettre en oeuvre au moment où il reçoit des données pour une communication interne ou externe du dispositif 603.

A une étape 606 (bloc "Comm Start"), successive à l'étape 605, une communication commence. La communication peut être une communication interne au dispositif 603 ou une communication externe entre le dispositif 603 et un autre dispositif électronique. En pratique, le routeur 601 commence à recevoir des données d'un premier module avec comme instruction de les transmettre à un deuxième module. Selon un exemple, le premier module est un module interne du dispositif électronique 603, et le deuxième module est indifféremment un module interne du dispositif électronique ou un dispositif électronique externe au dispositif électronique 603.

De plus, à l'étape 606, un module tiers demande l'accès aux données échangées lors de la communication.

A une étape 607 (bloc "Policy Check"), le routeur 601 consulte la série de règles POL6 pour savoir si une règle doit être mise en oeuvre. Si aucune règle n'est à appliquer (sortie Y du bloc "Policy check") l'étape suivante est une étape 608 (bloc "EXECUTE Comm"), sinon (sortie N du bloc "Policy check") l'étape suivante est une étape 609 (bloc "Action").

A l'étape 608, successive à l'étape 607, le routeur 601 transmet les données au module tiers sans qu'aucune autre action ne soit mise en oeuvre.

A l'étape 609, successive à l'étape 607, une règle de la série de règles POL6 correspond à la situation dans laquelle se trouve la communication. Le routeur 601 met alors la règle en exécution.

Selon un exemple, une règle peut imposer que le transfert de données à un module tiers d'une communication venant d'un module spécifique du dispositif 603 ou d'un dispositif externe au dispositif 603 soit précédé d'un procédé d'authentification, par exemple réalisé par le routeur 601 ou par l'élément sécurisé 602. Selon un autre exemple, une règle peut interdire la transmission à un module tiers de toutes données d'une communication venant d'un module spécifique du dispositif 603 ou d'un dispositif externe au dispositif 603. Selon un autre exemple, une règle peut imposer que toutes les données d'un certain type, par exemple des données ayant toute un format ou un en-tête spécifique, soient chiffrées.

Dans le cas où certaines des règles sont fournies par des applications mises en oeuvre par le dispositif 603, les règles fournies par ces applications peuvent concerner le type de procédé d'authentification utilisé pour accorder ou non la communication.

De plus, si les règles suivies pour une communication donnée sont fournies par des première et deuxième applications en cours d'exécution, alors les règles fournies par les deux applications peuvent être utilisées en parallèle. Selon un exemple pratique, si une première application A exige la présentation d'un mot de passe pour autoriser la transmission de données DATA-A faisant partie de données DATA d'une communication, et qu'une application B exige une authentification par mot de passe et par l'intermédiaire d'un serveur externe pour autoriser la transmission de données DATA-B faisant partie des données DATA, l'utilisateur ne fournissant que le mot de passe ne verra que la transmission des données DATA-A mise en oeuvre, et pas la transmission des données DATA-B. Si le dispositif 603 est équipé d'un écran, l'utilisateur pourrait, par exemple, savoir quelle règle a été mise en oeuvre et quelle règle n'a pas pu être mise en oeuvre.

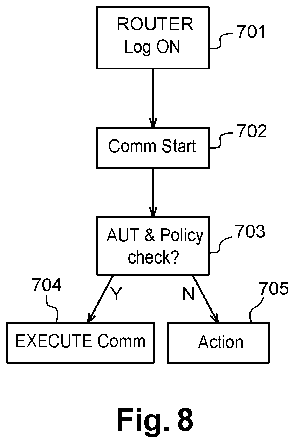

Le mode de mise en oeuvre de la figure 7 peut être combiné avec les modes de mise en oeuvre des figures 5 et 6. Cela est décrit en relation avec la figure 8.

La figure 8 est un schéma-bloc illustrant un autre mode de mise en oeuvre d'un procédé de communication sécurisé mettant en oeuvre un routeur et un élément sécurisé d'un même dispositif électronique. Le dispositif est du type du dispositif 100 décrit en relation avec la figure 1, et ainsi le routeur et l'élément sécurisé sont, respectivement, du type du routeur 102 et de l'élément sécurisé 101.

Le routeur décrit ici comprend une série de règles du type de la série de règles POL6 décrite en relation avec la figure 7. L'élément sécurisé a fourni cette série de règles au routeur comme décrit en relation avec la figure 7.

A une étape 701 (bloc "Router Log ON"), le routeur est mis dans un mode de fonctionnement sécurisé. Cette étape est identique à l'étape 404 décrite en relation avec la figure 5.

A une étape 702 (bloc "Comm Start"), successive à l'étape 701, une communication commence. La communication peut être une communication interne au dispositif ou une communication externe entre le dispositif et un autre dispositif électronique. En pratique, le routeur commence à recevoir des données avec comme instruction de les transmettre à un module du dispositif ou à un autre dispositif électronique externe au dispositif.

De plus, à l'étape 702, un module tiers demande l'accès à tout ou partie des données de la communication.

A une étape 703 (bloc "Aut & Policy Check"), successive à l'étape 702, les données et l'instruction de communication sont soumises à la série de règles stockée dans le routeur, et au procédé d'authentification pouvant être mis en oeuvre par le mode sécurisé du routeur. Selon un premier exemple, le routeur met en premier lieu en oeuvre la série de règles comme décrit en relation avec la figure 7, puis met en oeuvre l'authentification selon l'une des variantes présentées en relation avec la figure 5 ou la figure 6. Selon un deuxième exemple, le routeur met en premier lieu en oeuvre l'authentification selon l'une des variantes présentées en relation avec la figure 5 ou la figure 6, puis met en oeuvre la série de règles comme décrit en relation avec la figure 7.

Si le module tiers est autorisé à avoir accès aux données de la communication (sortie Y du bloc "Aut & Policy Check") l'étape suivante est une étape 704 (bloc "EXECUTE Comm"), sinon (sortie N du bloc "Aut & Policy check") l'étape suivante est une étape 705 (bloc "Action").

A l'étape 704, successive à l'étape 703, le routeur transmet les données au module tiers sans qu'aucune autre action ne soit mise en oeuvre.

A l'étape 705, successive à l'étape 703, l'instruction que le routeur essaye de mettre en oeuvre tombe dans le cas d'une des règles de la série de règles, et/ou le procédé d'authentification n'a pas donné de réponse favorable. Le routeur met alors la règle en exécution et/ou interdit la communication.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

En particulier, différentes modes de mise en oeuvre de stockage des données DATA4 peuvent être envisagés.

Selon un premier exemple, le module stockant les données DATA4, c'est-à-dire le routeur ou l'élément sécurisé, peut utiliser une mémoire à taille limitée. Si la mémoire est pleine alors un message d'alerte est envoyée et le module prend une décision pour libérer de l'espace. Selon une variante, la mémoire peut être une mémoire circulaire, c'est-à-dire une mémoire qui, une fois remplie au maximum, efface les données les plus anciennes pour libérer de l'espace. Le module peut aussi ne stocker que les données DATA4 d'un certain type, c'est-à-dire faire un tri parmi les données DATA4 pour ne stocker que les données utiles et éviter le stockage double de données, un tel mode de stockage s'appelle un stockage par agrégation.

Selon un deuxième exemple, le module stockant les données DATA4 peut décider de stocker ces données dans un autre module du dispositif, en ayant appliqué auparavant la série de règles, le cas échéant.

Enfin, la mise en oeuvre pratique des modes de réalisation et variantes décrits est à la portée de la personne du métier à partir des indications fonctionnelles données ci-dessus.

## Revendications

1. Procédé de communication, à un module tiers d'un premier dispositif électronique, de premières données (DATA4) échangées entre un premier module du premier dispositif électronique (100 ; 200 ; 300) et un deuxième module, le module tiers étant différent du premier module et du deuxième module, le premier dispositif comprenant au moins un élément sécurisé (101 ; 201 ; 402) et un routeur (102 ; 202 ; 401) transmettant les premières données (DATA4) du premier module au deuxième module, le routeur (102 ; 202 ; 401) étant adapté à être mis dans un mode sécurisé dans lequel, lorsque le module tiers demande accès aux premières données (DATA4), un procédé d'authentification est mis en oeuvre pour vérifier si le module tiers est autorisé ou non à avoir accès aux premières données (DATA4).

2. Dispositif électronique comprenant au moins :
- un premier module électronique ;
- un élément sécurisé ;
- un routeur (102 ; 202 ; 401 ; 601) échangeant des premières données (DATA4) entre le premier module et un deuxième module ; et
- un module tiers différent du premier module et du deuxième module,
le routeur (102 ; 202 ; 401 ; 601) étant adapté à être mis dans un mode sécurisé dans lequel, lorsque le module tiers demande accès aux premières données (DATA4), un procédé d'authentification est mis en oeuvre pour vérifier si le module tiers est autorisé ou non à avoir accès aux premières données (DATA4).

3. Procédé selon la revendication 1, ou dispositif selon la revendication 2, dans lequel pendant la mise en oeuvre du procédé d'authentification les premières données (DATA4) sont stockées dans l'élément sécurisé (101 ; 201 ; 402) ou dans le routeur (102 ; 202 ; 401).

4. Procédé ou dispositif selon la revendication 3, dans lequel pendant leur stockage, les premières données (DATA4) sont au moins partiellement visibles par le module tiers.

5. Procédé selon l'une quelconque des revendications 1, 3 ou 4, ou dispositif selon l'une quelconque des revendications 2 à 4, dans lequel le procédé d'authentification est mis en oeuvre par le routeur (102 ; 202 ; 401).

6. Procédé selon l'une quelconque des revendications 1, 3 ou 4, ou dispositif selon l'une quelconque des revendications 2 à 4, dans lequel le procédé d'authentification est mis en oeuvre par l'élément sécurisé.

7. Procédé selon l'une quelconque des revendications 1, 3 à 6, ou dispositif selon l'une quelconque des revendications 2 à 6, dans lequel le procédé d'authentification permet d'authentifier, en plus du module tiers, le premier module, le deuxième module, ou l'utilisateur du premier dispositif.

8. Procédé selon l'une quelconque des revendications 1, 3 à 7, ou dispositif selon l'une quelconque des revendications 2 à 7, dans lequel le procédé d'authentification est mis en oeuvre par l'intermédiaire d'un serveur externe.

9. Procédé selon l'une quelconque des revendications 1, 3 à 8, ou dispositif selon l'une quelconque des revendications 2 à 8, dans lequel le procédé d'authentification comprend la mise en oeuvre de plusieurs règles secondaires.

10. Procédé selon l'une quelconque des revendications 1, 3 à 9, ou dispositif selon l'une quelconque des revendications 2 à 9, dans lequel le routeur (102 ; 202 ; 401) est adapté à demander l'autorisation pour être dans le mode sécurisé (101 ; 201 ; 402).

11. Procédé selon l'une quelconque des revendications 1, 3 à 10, ou dispositif selon l'une quelconque des revendications 2 à 10, dans lequel le routeur (102 ; 202 ; 401 ; 601) est adapté à sortir du mode sécurisé à réception d'une instruction particulière.

12. Procédé ou dispositif selon la revendication 11, dans lequel la commande particulière provient de l'élément sécurisé.

13. Procédé selon l'une quelconque des revendications 1, 3 à 12, ou dispositif selon l'une quelconque des revendications 3 à 12, dans lequel le routeur (102 ; 202 ; 401 ; 601) comprend une série de règles concernant la politique de sécurité des communications du premier dispositif.

14. Procédé ou dispositif selon la revendication 13, dans lequel l'élément sécurisé (101 ; 201 ; 402 ; 602) transmet ladite série de règles audit routeur (102 ; 202 ; 401 ; 601).

15. Procédé selon l'une quelconque des revendications 1, 3 à 14, ou dispositif selon l'une quelconque des revendications 2 à 14, dans lequel le deuxième module fait partie du premier dispositif électronique.

16. Procédé selon l'une quelconque des revendications 1, 3 à 14, ou dispositif selon l'une quelconque des revendications 2 à 14, dans lequel le deuxième module fait partie d'un deuxième dispositif électronique, différent du premier dispositif électronique.

17. Procédé selon l'une quelconque des revendications 1, 3 à 16, ou dispositif selon l'une quelconque des revendications 2 à 16, dans lequel le routeur (102 ; 202 ; 401 ; 601) est intégré à une puce mettant en oeuvre le premier module (100 ; 200 ; 300) et/ou le module tiers.

## Patentansprüche

1. Ein Verfahren zum Kommunizieren, an ein Drittanbieter-Modul einer ersten elektronischen Einrichtung, von ersten Daten (DATA4), die zwischen einem ersten Modul der ersten elektronischen Einrichtung (100; 200; 300) und einem zweiten Modul ausgetauscht werden, wobei das Drittanbieter-Modul sich vom ersten Modul und vom zweiten Modul unterscheidet, wobei die erste Einrichtung wenigstens ein Sicherheitselement aufweist (101; 201; 402) und einen Router (102; 202; 401) aufweist, der die ersten Daten (DATA4) vom ersten Modul zum zweiten Modul überträgt, wobei der Router (102; 202; 401) ausgelegt ist, in einen sicheren Modus versetzt zu werden, in dem, wenn das Drittanbieter-Modul Zugriff auf die ersten Daten (DATA4) anfordert, ein Authentifizierungsverfahren implementiert wird, um zu überprüfen, ob das Drittanbieter-Modul zum Zugriff auf die ersten Daten (DATA4) autorisiert ist oder nicht.

2. Eine elektronische Einrichtung, die wenigstens Folgendes aufweist:
- ein erstes elektronisches Modul;
- ein Sicherheitselement;
- einen Router (102; 202; 401; 601), der erste Daten (DATA4) zwischen dem ersten Modul und einem zweiten Modul austauscht; und
- ein Drittanbieter-Modul, das sich vom ersten Modul und vom zweiten Modul unterscheidet,
wobei der Router (102; 202; 401; 601) ausgelegt ist, in einen sicheren Modus versetzt zu werden, in dem, wenn das Drittanbieter-Modul Zugriff auf die ersten Daten (DATA4) anfordert, ein Authentifizierungsverfahren implementiert wird, um zu überprüfen, ob das Drittanbieter-Modul zum Zugriff auf die ersten Daten (DATA4) autorisiert ist oder nicht.

3. Das Verfahren nach Anspruch 1 oder die Einrichtung nach Anspruch 2, wobei während der Implementierung des Authentifizierungsverfahrens die ersten Daten (DATA4) im Sicherheitselement (101; 201; 402) oder im Router (102; 202; 401) gespeichert werden.

4. Das Verfahren oder die Einrichtung nach Anspruch 3, wobei während ihrer Speicherung die ersten Daten (DATA4) wenigstens teilweise für das Drittanbieter-Modul sichtbar sind.

5. Das Verfahren nach einem der Ansprüche 1, 3 oder 4 oder die Einrichtung nach einem der Ansprüche 2 bis 4, wobei das Authentifizierungsverfahren durch den Router (102; 202; 401) implementiert wird.

6. Das Verfahren nach einem der Ansprüche 1, 3 oder 4 oder die Einrichtung nach einem der Ansprüche 2 bis 4, wobei das Authentifizierungsverfahren durch das Sicherheitselement implementiert wird.

7. Das Verfahren nach einem der Ansprüche 1, 3 bis 6 oder die Einrichtung nach einem der Ansprüche 2 bis 6, wobei das Authentifizierungsverfahren zusätzlich zum Drittanbieter-Modul die Authentifizierung des ersten Moduls, des zweiten Moduls oder des Benutzers der ersten Einrichtung ermöglicht.

8. Das Verfahren nach einem der Ansprüche 1, 3 bis 7 oder die Einrichtung nach einem der Ansprüche 2 bis 7, wobei das Authentifizierungsverfahren über einen externen Server implementiert wird.

9. Das Verfahren nach einem der Ansprüche 1, 3 bis 8 oder die Einrichtung nach einem der Ansprüche 2 bis 8, wobei das Authentifizierungsverfahren die Implementierung einer Vielzahl von sekundären Regeln aufweist.

10. Das Verfahren nach einem der Ansprüche 1, 3 bis 9 oder die Einrichtung nach einem der Ansprüche 2 bis 9, wobei der Router (102, 202; 401) ausgelegt ist, eine Autorisierung für den sicheren Modus (101; 201; 402) anzufordern.

11. Das Verfahren nach einem der Ansprüche 1, 3 bis 10 oder die Einrichtung nach einem der Ansprüche 2 bis 10, wobei der Router (102; 202; 401; 601) ausgelegt ist, den sicheren Modus bei Empfang einer bestimmten Anweisung zu verlassen.

12. Das Verfahren oder die Einrichtung nach Anspruch 11, wobei die bestimmte Anweisung von dem Sicherheitselement stammt.

13. Das Verfahren nach einem der Ansprüche 1, 3 bis 12 oder die Einrichtung nach einem der Ansprüche 3 bis 12, wobei der Router (102; 202; 401; 601) eine Reihe von Regeln bezüglich der Kommunikationssicherheitsrichtlinie der ersten Einrichtung aufweist.

14. Das Verfahren oder die Einrichtung nach Anspruch 13, wobei das Sicherheitselement (101; 201; 402; 602) die Reihe von Regeln an den Router (102; 202; 401; 601) überträgt.

15. Das Verfahren nach einem der Ansprüche 1, 3 bis 14 oder die Einrichtung nach einem der Ansprüche 2 bis 14, wobei das zweite Modul Teil der ersten elektronischen Einrichtung ist.

16. Das Verfahren nach einem der Ansprüche 1, 3 bis 14 oder die Einrichtung nach einem der Ansprüche 2 bis 14, wobei das zweite Modul Teil einer zweiten elektronischen Einrichtung ist, die sich von der ersten elektronischen Einrichtung unterscheidet.

17. Das Verfahren nach einem der Ansprüche 1, 3 bis 16 oder die Einrichtung nach einem der Ansprüche 2 bis 16, wobei der Router (102; 202; 401; 601) in einen Chip integriert ist, der das erste Modul (100; 200; 300) und/oder das Drittanbieter-Modul implementiert.

## Claims

1. Method of communication, to a third party module of a first electronic device, of first data (DATA4) exchanged between a first module of the first electronic device (100; 200; 300) and a second module, the third party module being different from the first module and from the second module, the first device comprising at least a secure element (101; 201; 402) and a router (102; 202; 401) transmitting the first data (DATA4) from the first module to the second module, the router (102; 202; 401) being adapted to being set to a secure mode in which, when the third party module requests access to the first data (DATA4), an authentication method is implemented to verify whether or not the third party module is authorized access to the first data (DATA4).

2. Electronic device comprising at least:
- a first electronic module;
- a secure element;
- a router (102; 202; 401; 601) exchanging first data (DATA4) between the first module and a second module; and
- a third party module different from the first module and from the second module,
the router (102; 202; 401; 601) being adapted to being set to a secure mode in which, when the third party module requests access to the first data (DATA4), an authentication method is implemented to verify whether or not the third party module is authorized access to the first data (DATA4).

3. Method according to claim 1, or device according to claim 2, wherein during the implementation of the authentication method, the first data (DATA4) are stored in the secure element (101; 201; 402) or in the router (102; 202; 401).

4. Method or device according to claim 3, wherein during their storage, the first data (DATA4) are at least partially visible by the third party module.

5. Method according to any of claims 1, 3 or 4, or device according to any of claims 2 to 4, wherein the authentication method is implemented by the router (102; 202; 401).

6. Method according to any of claims 1, 3 or 4, or device according to any of claims 2 to 4, wherein the authentication method is implemented by the secure element.

7. Method according to any of claims 1, 3 to 6, or device according to any of claims 2 to 6, wherein the authentication method enables to authenticate, in addition to the third party module, the first module, the second module, or the user of the first device.

8. Method according to any of claims 1, 3 to 7, or device according to any of claims 2 to 7, wherein the authentication method is implemented via an external server.

9. Method according to any of claims 1, 3 to 8, or device according to any of claims 2 to 8, wherein the authentication method comprises the implementation of a plurality of secondary rules.

10. Method according to claims 1, 3 to 9, or device according to any of claims 2 to 9, wherein the router (102, 202; 401) is adapted to requesting authorization to be in the secure mode (101; 201; 402).

11. Method according to any of claims 1, 3 to 10, or device according to any of claims 2 to 10, wherein the router (102; 202; 401; 601) is adapted to leaving the secure mode on reception of a specific instruction.

12. Method or device according to claim 11, wherein the specific instruction originates from the secure element.

13. Method according to any of claims 1, 3 to 12 or device according to any of claims 3 to 12, wherein the router (102; 202; 401; 601) comprises a series of rules concerning the communications security policy of the first device.

14. Method or device according to claim 13, wherein the secure element (101; 201; 402; 602) transmits said series of rules to said router (102; 202; 401; 601).

15. Method according to any of claims 1, 3 to 14, or device according to any of claims 2 to 14, wherein the second module forms part of the first electronic device.

16. Method according to any of claims 1, 3 to 14, or device according to any of claims 2 to 14, wherein the second module forms part of a second electronic device, different from the first electronic device.

17. Method according to any of claims 1, 3 to 16, or device according to any of claims 2 to 16, wherein the router (102; 202; 401; 601) is incorporated in a chip implementing the first module (100; 200; 300) and/or the third party module.
